# EUROPEAN PATENT APPLICATION

(11) **EP 4 679 798 A1**
(43) Date of publication of application: **14.01.2026**
(21) Application number: 24758437.8
(22) Date of filing: 22.05.2024
(51) Int. Cl.: H04L 45/48, H04L 45/02, H04L 45/24, H04L 45/28, H04L 45/18

(54) **COMMUNICATION METHOD, SYSTEM AND APPARATUS, NETWORK DEVICE, AND TARGET DEVICE**

(71) Applicant: New H3C Technologies Co., Ltd., Hangzhou, Zhejiang 310052 (CN)
(72) Inventor: WANG, Meng, Beijing 100102 (CN)
(74) Representative: IPAZ
(86) International application number: PCT/CN2024/094652
(87) International publication number: WO 2025/241105

(57) **Abstract**

The examples of the present application provide a communication method, system, apparatus, a network device, and a target device, which relate to the field of communication technology and are applied to any network device of the multiple network devices in an MLAG system. The method comprises: receiving an STP packet carrying a path cost value sent by the target device, wherein the path cost value is used to indicate the number of interfaces being in a normal state of the multiple interfaces; maintaining the MLAG system, if the keepalive link and peer-link link established among multiple network devices are disconnected and it is determined that the first path cost value is different from the second path cost value. The examples of the present application can be applied to ensure the normal sending of network traffic.

## Description

### Technical Field

The present application relates to the field of communication technology, particularly to a communication method, system, apparatus, a network device, and a target device.

### Background

Multichassis Link Aggregation Group (MLAG) is a mechanism for implementing multichassis link aggregation, which can logically virtualize multiple network devices into one network device, forming a unified two-layer logical node. It is equivalent to sending traffic by using multiple network devices as one network device, thereby improving link reliability from board level to device level.

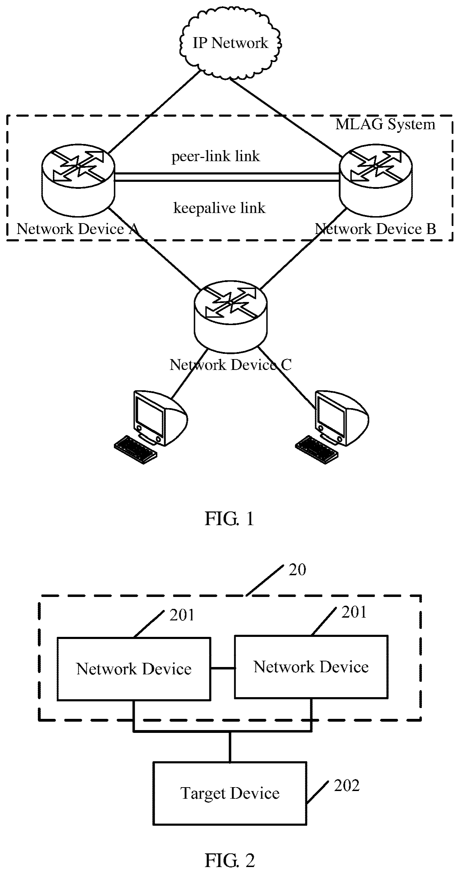

Refer to FIG. 1, it is shown that a schematic diagram of an MLAG scenario provided in related technologies. As shown in the figure below, network device A and network device B are neighbors to each other, forming an MLAG system. The network device in the MLAG system can also be referred to as an MLAG device. Network device A is a primary device, and network device B is a slave device. The MAC (Media Access Control Address) addresses of network device A and network device B are configured as the same MAC address, and the priority of Link Aggregation Control Protocol (LACP) is configured as the same LACP system priority, to be virtualized as one network device, forming load sharing and jointly sending traffic. The MLAG system shown in the figure contains two network devices, which is only one example. This application does not limit the number of network devices in the MLAG system.

Network device C is connected to network device A and network device B respectively. And network device C is connected to user devices, while network device A and network device B are respectively connected to the IP (Internet Protocol) network.

The interface role defined by MLAG for each network device (i.e. network device A and network device B) comprises: MLAG interface, peer-link (Intra-Portal) interface, and keepalive interface. The MLAG interface is the two-layer aggregation interface that connects a network device to an external device. The interfaces connected to network device C and IP network on network devices A and B in FIG. 1 are all MLAG interfaces. MLAG interfaces connected to the same aggregation group on external devices belong to the same MLAG group. The MLAG interface 1 on network device A in FIG. 1 belongs to the same MLAG group as the MLAG interface 2 on network device B.

In addition, the peer-link interface is used to connect to a peer network device for Intra-Portal. Each network device in the MLAG system has only one peer-link interface. The link between the peer-link interfaces of network devices is a peer-link link, through which network devices interact with protocol packets and transmit data traffic. There is only one peer-link link in each MLAG system.

Network devices exchange a keepalive packet through a keepalive link to detect the status of the neighbor thereof, that is, to perform dual-primary detection in case of peer-link link failure through the interaction of the keepalive packet.

When the MLAG system is running normally, network device C can achieve network communication by sending traffic to network device A or network device B. When one network device in the MLAG system fails, traffic can quickly switch to another network device to ensure the normal operation of business, which means the link reliability is improved to the device level.

In related technologies, if the peer-link link and keepalive link between network devices fail, the MLAG system will be split. In order to avoid network devices being used as the primary devices for traffic sending after the MLAG system split, it is necessary to configure each network device to enter independent mode and start working independently. When configured in the independent mode, the MAC address of each network device will change. During the configuration of MAC address changes, network devices are unable to send traffic during the process of relearning table entries, resulting in oscillations in the MLAG interface.

Especially when a network device enters a shutdown state due to a failure or restart, the overall shutdown of the network device causes the peer-link link and keepalive link between the network devices to disconnect, and other network devices will misjudge and then enter an independent mode. During this process, all network devices are unable to send traffic, which can cause unnecessary oscillations in the MLAG interface and affect network traffic sending.

### Summary

The purpose of examples of the present application provides a communication method, system, apparatus, a network device, and a target device to ensure that some network devices in the MLAG system enter a shutdown state, without affecting the sending of network traffic. The specific technical solution is as follows:
In a first aspect, an example of the present application provides a communication method, which is applied to any one of multiple network devices forming a Multichassis Link Aggregation Group, MLAG, system, and the method comprises:
   receiving a Spanning Tree Protocol, STP, packet carrying a path cost value sent by a target device, wherein the target device comprises multiple interfaces, each interface used to access one network device in the MLAG system, and the path cost value is used to indicate a number of interfaces being in a normal state of the multiple interfaces;
   maintaining the MLAG system, if a keepalive link and an Intra-Portal, peer-link, link established among the multiple network devices are both disconnected and it is determined that a first path cost value is different from a second path cost value, wherein the first path cost value is a path cost value carried in the STP packet received before the keepalive link and the peer-link link are both disconnected, and the second path cost value is a path cost value carried in the STP packet received after the keepalive link and the peer-link link are both disconnected.
In a second aspect, an example of the present application provides a communication method, which is applied to a target device accessing a Multichassis Link Aggregation Group, MLAG, system, wherein the MLAG system is formed by multiple network devices, and the target device comprises multiple interfaces, each interface being used for accessing one network device in the MLAG system, the method comprises:
   sending a first Spanning Tree Protocol, STP, packet to the network device in the MLAG system based on a hash principle, wherein the first STP packet comprises a first path cost value;
   sending a second STP packet to the network device in the MLAG system based on the hash principle, wherein the second STP packet comprises a second path cost value, so that any one of the network devices in the MLAG system maintains the MLAG system when it is determined that a keepalive link and an Intra-Portal, peer-link, link established among the multiple network devices are both disconnected and the first path cost value is different from the second path cost value;
   wherein, the first path cost value is a path cost value carried in the STP packet received by the network device before the keepalive link and the peer-link link are both disconnected, and the second path cost value is a path cost value carried in the STP packet received by the network device after the keepalive link and the peer-link link are both disconnected.
In a third aspect, an example of the present application provides a communication system, which comprises: multiple network devices forming a Multichassis Link Aggregation Group, MLAG, system, and a target device accessing the MLAG system, wherein the target device comprises multiple interfaces, each interface being used for accessing one network device in the MLAG system;
   any one of the multiple network devices is to implement any one of methods in the first aspect;
   the target device is to implement any one of methods in the second aspect.
In a fourth aspect, an example of the present application provides a network device, which is any one of multiple network devices forming a Multichassis Link Aggregation Group, MLAG, system, the network device comprises:
   a processor;
   a transceiver;
   a machine readable storage medium, in which machine executable instructions executable by a processor are stored, and the machine executable instructions cause the processor to perform the following blocks:
      receiving a Spanning Tree Protocol, STP, packet carrying a path cost value sent by a target device, wherein the target device comprises multiple interfaces, each interface used to access one network device in the MLAG system, and the path cost value is used to indicate a number of interfaces being in a normal state of the multiple interfaces;
      maintaining the MLAG system, if a keepalive link and an Intra-Portal, peer-link, link established among the multiple network devices are both disconnected and it is determined that a first path cost value is different from a second path cost value, wherein the first path cost value is a path cost value carried in the STP packet received before the keepalive link and the peer-link link are both disconnected, and the second path cost value is a path cost value carried in the STP packet received after the keepalive link and the peer-link link are both disconnected.
In a fifth aspect, an example of the present application provides a target device, which accesses a Multichassis Link Aggregation Group, MLAG, system, wherein the MLAG system is formed by multiple network devices, and the target device comprises multiple interfaces, each interface being used for accessing one network device in the MLAG system, the target device comprises:
   a processor;
   a transceiver;
   a machine readable storage medium, in which machine executable instructions executable by a processor are stored, and the machine executable instructions cause the processor to perform the following blocks:
      sending a first Spanning Tree Protocol, STP, packet to the network device in the MLAG system based on a hash principle, wherein the first STP packet comprises a first path cost value;
      sending a second STP packet to the network device in the MLAG system based on the hash principle, wherein the second STP packet comprises a second path cost value, so that any one of the network devices in the MLAG system maintains the MLAG system when it is determined that a keepalive link and an Intra-Portal, peer-link, link established among the multiple network devices are both disconnected, and the first path cost value is different from the second path cost value;
      wherein, the first path cost value is a path cost value carried in the STP packet received by the network device before the keepalive link and the peer-link link are both disconnected, and the second path cost value is a path cost value carried in the STP packet received by the network device after the keepalive link and the peer-link link are both disconnected.
In a sixth aspect, an example of the present application provides a communication apparatus, which is applied to any one of multiple network devices forming a Multichassis Link Aggregation Group, MLAG, system, and the apparatus comprises:
   an STP packet receiving module, to receive a Spanning Tree Protocol, STP, packet carrying a path cost value sent by a target device, wherein the target device comprises multiple interfaces, each interface used to access one network device in the MLAG system, and the path cost value is used to indicate a number of interfaces being in a normal state of the multiple interfaces;
   a system maintaining module, to maintain the MLAG system, if a keepalive link and an Intra-Portal, peer-link, link established among the multiple network devices are both disconnected and it is determined that a first path cost value is different from a second path cost value, wherein the first path cost value is a path cost value carried in the STP packet received before the keepalive link and the peer-link link are both disconnected, and the second path cost value is a path cost value carried in the STP packet received after the keepalive link and the peer-link link are both disconnected.
In a seventh aspect, an example of the present application provides a communication apparatus, which is applied to a target device accessing a Multichassis Link Aggregation Group, MLAG, system, wherein the MLAG system is formed by multiple network devices, and the target device comprises multiple interfaces, each interface being used for accessing one network device in the MLAG system, the apparatus comprises:
   a first STP packet sending module, to send a first Spanning Tree Protocol, STP, packet to the network device in the MLAG system based on a hash principle, wherein the first STP packet comprises a first path cost value;
   a second STP packet sending module, to send a second STP packet carrying a path cost value to the network device in the MLAG system based on the hash principle, wherein the second STP packet comprises a second path cost value, so that any one of the network devices in the MLAG system maintains the MLAG system when it is determined that a keepalive link and an Intra-Portal, peer-link, link established among the multiple network devices are both disconnected, and the first path cost value is different from the second path cost value;
   wherein, the first path cost value is a path cost value carried in the STP packet received by the network device before the keepalive link and peer-link link are both disconnected, and the second path cost value is a path cost value carried in the STP packet received by the network device after the keepalive link and peer-link link are both disconnected.
In an eighth aspect, an example of the present application provides a machine readable storage medium, in which machine executable instructions are stored, and the machine executable instructions, when called and executed by a processor, cause the processor to implement any one of methods in the first aspect or any one of methods in the second aspect.
In a ninth aspect, an example of the present application provides a computer program product, which causes a processor to implement any one of methods in the first aspect or any one of methods in the second aspect.

Beneficial effects of the examples of the present application are as follows: In the communication methods provided by the examples of the present application, if any network device of the multiple network devices in the MLAG system determines that the keepalive link and the peer-link link established among multiple network devices are disconnected, it will not directly enter the splitting state of the MLAG system. In contrast, whether the path cost value carried in the STP packet sent by the target device connected to the MLAG system has changed is determined. If other network devices other than the network device restart or fail, causing the aforementioned other network devices to not work properly, all interfaces of said other network devices will be in a shutdown state, causing the channel between said other network devices and the target device to be disconnected, and the interfaces connected to other network devices on the target device will also be in a shutdown state. In this case, the number of interfaces being in a normal state on the target device will change, resulting in a change in the path cost value carried in the STP packet sent by the target device. If the network device determines that the first path cost value and the second path cost value are different, it can be determined that all interfaces of said other network devices are shut down, and said other network devices are currently not working properly.

In this case, the network device will not directly enter the split state of the MLAG system due to the disconnection of links between multiple network devices. Instead, further judgment will be made based on whether the first path cost value and the second path cost value carried by the STP packet are the same. When determining that the first path cost value is different from the second path cost value, that is, when said other network devices are not currently working properly, the MLAG system is maintained and their current MAC address and priority are continue to be maintained to send traffic. Therefore, oscillation of MLAG interface during the changing of MAC address and priority is avoided, thereby avoiding affecting the sending of network traffic.

### Brief Description of the Drawings

In order to more clearly describe the technical solution of the examples of the application or of the prior art, drawings needed in the examples and the prior art will be briefly described below. Obviously, the drawings described below are for only some examples of the present application, one of ordinary skills in the art can also obtain other drawings on the basis of these drawings without any creative efforts.
FIG. 1 is a schematic diagram of an MLAG scenario provided in related technologies;
FIG. 2 is a schematic diagram of a structure of a communication system provided by an example of the present application;
FIG. 3 is a schematic diagram of a first application scenario provided by an example of the present application;
FIG. 4 is a schematic diagram of a second application scenario provided by an example of the present application;
FIG. 5 is a schematic diagram of a flow of a first communication method provided by an example of the present application;
FIG. 6 is a schematic diagram of a third application scenario provided by an example of the present application;
FIG. 7 is a schematic diagram of a flow of a second communication method provided by an example of the present application;
FIG. 8 is a schematic diagram of a structure of a network device provided by an example of the present application;
FIG. 9 is a schematic diagram of a structure of a target device provided by an example of the present application;
FIG. 10 is a schematic diagram of a structure of a first communication apparatus provided by an example of the present application;
FIG. 11 is a schematic diagram of a structure of a second communication apparatus provided by an example of the present application;

### Detailed Description

The technical solution of the application will be described in detail with reference to the drawings of examples of the present application. Obviously, the examples described herein are only some instead of all of the examples of the present application. All other examples obtained by those of ordinary skills in the art based on the examples herein without any creative efforts are within the scope of the present application.

In related technologies, for Layer 2, MLAG technology can be understood as a horizontal virtualization technology that logically virtualizes multiple network devices into one device, forming a unified Layer 2 logical node. MLAG technology provides a two-layer topology without loops and simultaneously achieves redundant backup, eliminating the need for cumbersome spanning tree protocol configuration, greatly simplifying networking and configuration.

When the peer-link link and keepalive link between network devices are both in the DOWN state, the MLAG system enters a split state. Currently, there are mainly the following methods to manage the split of the MLAG system: (1) - (2).

### Method (1): MAD (Multi-Active Detection) Down maintaining function.

When the peer-link fails and the keepalive link is working properly, the primary device will work properly and the slave device will automatically shut down all interfaces on the slave device except for the IRF (Intelligent Resilient Framework) reserved interface and MLAG reserved interface. The interface shut down is configured to be in an MLAG MAD DOWN state.

In this case, if the keepalive link also fails, the interface configured to be in the MLAG MAD DOWN state on the slave device will be upgraded to the primary device. In this case, network devices can act as the primary device to send traffic, causing a network failure. To avoid the above situation, the MLAG MAD DOWN maintaining function can be enabled, to maintain the interface on the slave device to be continuously in the MLAG MAD DOWN state and not participate in traffic sending.

But method (1) is only applicable to scenario where the peer-link link fails first and the keepalive link fails later. If the keepalive link fails first and the peer-link link fails later, this mechanism will not work.

### Method (2): Network device in an independent mode.

When the MLAG system is split, in order to avoid the network devices in the MLAG system being used as the primary devices for traffic sending, it is necessary to configure the network device to work independently. When both the peer-link link and keepalive link are in the DOWN state, the slave device will switch to be in the independent mode immediately or after a period of time.

After the slave device switches to be in the independent mode, the MLAG system parameters carried in the LACP packet sent by the aggregation interface are restored to the original MAC address and LACP system priority of the interface, that is, the interface is restored to its state before being configured as an interface in the MLAG system. As a result, the MAC address of the aggregation interface in the same MLAG system is inconsistent with the LACP system priority thereof. In this way, the two network devices start to work independently, and only the member port of one aggregation interface can be selected during traffic sending. By sending business traffic through selected devices, abnormal traffic sending can be avoided.

Although method (2) is applicable to the scenario where method (1) is not applicable, when method (2) is used for MLAG system splitting management, if one network device enters a shutdown state due to a failure or restart, other network devices will misjudge and then enter the independent mode, causing the MLAG system to split. During the split configuration of the MLAG system, all network devices are unable to send traffic, which can cause unnecessary oscillations in the MLAG interface and affect network traffic sending.

To address the aforementioned issues, examples of the present application provide a communication method, system, apparatus, a network device, and a target device.

Referring to FIG. 2 which is a schematic diagram of a structure of a communication system provided by an example of the present application, the system comprises multiple network devices 201 forming a MLAG system 20, and a target device 202 accessing the MLAG system 20. The target device 202 comprises multiple interfaces, each interface used to access one network device 201 in the MLAG system 20.

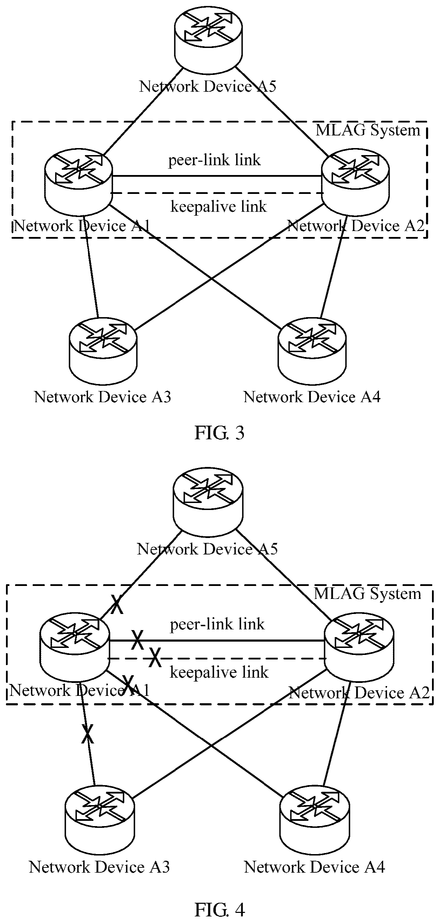

Referring to FIG. 3, it is a schematic diagram of a first application scenario provided by an example of the present application.

This scenario contains network device A1, network device A2, network device A3, network device A4, and network device A5. Network device A1 and network device A2 form the MLAG system, which correspond to network devices 201 in FIG. 2. The dashed line between network device A1 and network device A2 represents a keepalive link. The solid line between network device A1 and network device A2 represents a peer-link link. Network device A1 and network device A2 are respectively connected to network device A3 and network device A4 through MLAG interfaces. Network device A3 and network device A4 correspond to the target device 202 in FIG. 2. For example, the data transfer rate of the MLAG interface is at the gigabit level.

### Network device A1- Network device A4 enables STP (Spanning Tree Protocol).

The network device A1 and network device A5 are connected through the three-layer ECMP (Equal Cost Multipath Routing).

In this scenario, all network devices are in a normal state, so all interfaces are also in a normal state.

Based on the application scenario shown in FIG. 3, if network device A1 restarts, the application scenario will change. In this case, FIG. 4 is a schematic diagram of a second application scenario provided by an example of the present application.

During the restart process of network device A1, network device A1 is shut down, so all links connected to network device A1 are in a shutdown state, which is represented by "X" in the figure. In addition, the other parts of the application scenario shown in FIG. 4 are the same as those in FIG. 3 and will not be further elaborated here.

It should be noted that the number of network devices included in the MLAG system shown in FIGs. 3 and 4, as well as the number of target devices, are only shown as an example, and the number of both in this example is not specifically limited.

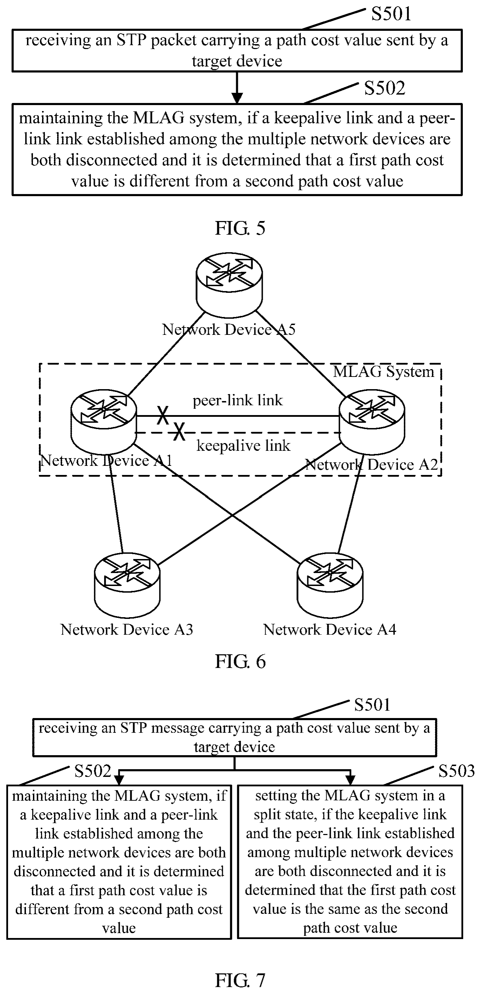

Based on the application scenarios shown in FIGs. 3 and 4, see FIG. 5. FIG. 5 is a schematic diagram of a flow of the first communication method provided in the present example, which is applied to any network device of the multiple network devices in the MLAG system. The above method comprises the following blocks S501 to S502.

Block S501: receiving an STP packet carrying a path cost value sent by a target device.

Wherein, the target device comprises multiple interfaces, each interface used to access one network device in the MLAG system, and the path cost value is used to indicate the number of interfaces being in a normal state among the multiple interfaces.

Taking the scenario shown in FIG. 3 as an example, all interfaces in the figure are in a normal state. In this case, the number of the interfaces being in a normal state on each of network device A3 and network device A4 is 2. Therefore, in this case, the number of the interfaces being in the normal state represented by the path cost value carried in the STP packet reported by network device A3 and network device A4 to network device A1 and network device A2 is 2. The sending of the STP packet follows the hash principle, and the STP packet may be sent to network device A1 or to network device A2. One of network devices A1 and A2 will receive the STP packet.

If during the restart period of network device A1, the interface of network device A1 closes. As shown in FIG. 4, the number of the interfaces being in the normal state on both network device A3 and network device A4 has decreased to be 1. Therefore, in this case, the path cost value carried in the STP packet reported by network device A3 and network device A4 to network device 201 has changed, compared to the application scenario shown in FIG. 3, to be a path cost value representing that the number of the interfaces is 1. Due to the restart of network device A1 and interface shutdown, the STP packet cannot be sent to network device A1, and only network device A2 will receive the above STP packet.

Please refer to Table 1 for the corresponding relationship table among link rate, port type, and path cost value provided in the examples of the present application.

**Table 1**

| Link Rate | Interface Type | Path Cost Value | | |
|---|---|---|---|---|
| | | IEEE 802.1D-1998 | IEEE 802.1t | Other Standards |
| 1000Mbps | Single Interface | 4 | 20000 | 20 |
| | Aggregation Interface (Two Interfaces) | | 10000 | 18 |
| | Aggregation Interface (Three Interfaces) | | 6666 | 16 |
| | Aggregation Interface (Four Interfaces) | | 5000 | 14 |

The link rate of 1000Mbps in Table 1 is only one example, and it is only a possible value for setting the path cost value as an example. This application does not limit the link rate. Different interface types correspond to different numbers of interfaces connected to devices that are in a normal state. From this table, it can be seen that if the IEEE 802.1D-1998 standard is used, the path cost value is the same regardless of the number of interfaces connected to devices that are in a normal state. Therefore, the IEEE 802.1D-1998 standard is not applicable to this solution. But the IEEE 802.1t standard is applicable to this solution. The above other standards are custom standards other than those specified by IEEE. The values of path cost values in other standards are only one example. As long as the path cost values are different for different interface types, this standard can be applied to the examples of this application.

In addition, the above STP packet comprises the MST BPDU (Multiple Spanning Tree Bridge Protocol Data Unit) field, which carries the above path cost value.

Block S502: maintaining the MLAG system, if a keepalive link and an Intra-Portal peer-link link established among the multiple network devices are both disconnected and it is determined that a first path cost value is different from a second path cost value.

Wherein, the first path cost value is a path cost value carried in the STP packet received before the keepalive link and peer-link link are both disconnected, and the second path cost value is a path cost value carried in the STP packet received after the keepalive link and peer-link link are both disconnected.

Specifically, the first path cost value can be the path cost value in the application scenario shown in FIG. 3, and the second path cost value can be the path cost value in the application scenario shown in FIG. 4.

Specifically, if the network device 201 determines that the keepalive link and peer-link link established among the multiple network devices are all disconnected, but the path cost value has not changed, it can be determined that not only the links between multiple network devices are disconnected, but the interface on the target device is also shut down. In this case, other network devices in the MLAG system should take as a complete failure or shutdown of the entire device. In this case, the network device that has not failed needs to maintain the MLAG system, continue to work, and ensure the normal sending of traffic in the network. Therefore, it is necessary to maintain the current MAC address and LACP system priority.

In the application scenarios shown in FIGs. 3 and 4, network device A1 restarts. Network device A2 can sense that the keepalive link and peer-link link between network device A1 and network device A2 are both disconnected. In this case, if relevant technology is followed, network device A2 will enter independent mode, causing traffic sending to be affected.

However, in the solution provided in this application, in the case where STP is based on the IEEE 802.1t standard, the aggregation interface connecting network device A3 and network device A4 comprises two interfaces which are in a normal state before network device A1 restarts. In this case, as shown in Table 1, the first path cost value carried by the STP packet is 10000. During the restart of network device A1, there is only a single interface being in the normal state between network device A3 and network device A4. In this case, as shown in Table 1, the second path cost value carried by the STP packet is 20000. Network device A2 determines that the first path cost value is different from the second path cost value. Then network device A2 can determine that not only is the interface of network device A1 connecting to network device A2 shut down, but the interface of network device A1 connecting to the target device is also shut down. That is to say, not only the keepalive link and peer-link link between network device A1 and network device A2 are disconnected, but the link between network device A1 and the target device is also disconnected. It's not that the keepalive link and peer-link link have failed, but rather that network device A1 has shut down or failed as a whole. In this case, network device A2 needs to maintain the MLAG system, continue to send traffic, and cannot enter independent mode. That is to say, it is necessary to maintain the current MAC address and LACP system priority. The MAC address of network device A2 remains the MAC address of the MLAG system, while the LACP system priority of network device A1 remains the LACP system priority of the MLAG system. Since the MAC address and LACP system priority of network device A2 have not changed, the MLAG interface will not experience unnecessary oscillations and traffic sending will not be affected.

In addition, the STP packet carries the Flags field, which has a data volume of 1 byte. For STP, the first Bit, which is the high-order Bit on the left, represents TCA (Topology Change Awareness). The last Bit, which is the low-order Bit on the right, represents TC (Topology Change), while other fields are reserved.

For RSTP (Rapid Spanning Tree Protocol) and MSTP (Multi Service Transport Platform), Bit7 is a TCA, Bit6 is an Agreement flag, Bit5 is a Forwarding flag, Bit4 is a Learning flag, Bit3 and Bit2 represent interface roles, Bit1 is a Proposal flag, and Bit0 is a TC.

For Bit3 and Bit2, if the value thereof is 00, it is indicated that the interface role is unknown; if the value is 01 (low-order bit is 1 and high-order bit is 0), it is indicated that the interface role is either an alternate interface or a backup interface; if the value is 10 (low-order bit is 0 and high-order bit is 1), it is indicated that the interface role is the root interface; and if the value is 11, it is indicated that the interface role is the specified port.

As can be seen from the above, in the communication method provided in the present example, if any network device of the multiple network devices in the MLAG system determines that the established keepalive link and peer-link link between multiple network devices are disconnected, it will not directly enter the split state of the MLAG system. In contrast, whether the path cost value carried in the STP packet sent by the target device connected to the MLAG system has changed is determined. If other network devices other than the network device restart or fail, causing the aforementioned other network devices to not work properly, all interfaces of said other network devices will be in a shutdown state, causing the channel between said other network devices and the target device to be disconnected, and the interfaces connected to other network devices on the target device will also be in a shutdown state. In this case, the number of interfaces being in a normal state on the target device will change, resulting in a change in the path cost value carried in the STP packet sent by the target device. If the network device determines that the first path cost value and the second path cost value are different, it can be determined that all interfaces of said other network devices are shut down, and said other network devices are currently not working properly.

In this case, the network device will not directly enter the split state of the MLAG system due to the disconnection of links between multiple network devices. Instead, further judgment will be made based on whether the first path cost value and the second path cost value carried by the STP packet are the same. When determining that the first path cost value is different from the second path cost value, that is, when said other network devices are not currently working properly, the MLAG system is maintained and their current MAC address and priority are continue to be maintained to send traffic. Therefore, oscillation of MLAG interface during the changing of MAC address and priority is avoided, thereby avoiding affecting the sending of network traffic.

In another example of the present application, see FIG. 6, it is a schematic diagram of the third application scenario provided in the present example. The interface connected to network device A2 on network device A1 shown in FIG. 3 fails, resulting in the disconnection of the keepalive link and peer-link link in this figure. Wherein, the keepalive link and peer-link link can be disconnected simultaneously, or the keepalive link can be disconnected first and the peer-link link disconnected later.

The symbol "×" in the figure indicates a link disconnection. In addition, the other parts of the application scenario shown in FIG. 6 are the same as those in FIG. 3 and will not be further elaborated here.

It should be noted that the number of network devices, as well as the number of target devices included in the MLAG system shown in FIGs. 3 and 6 are only one example, and the number of both in this example is not specifically limited.

Refer to FIG. 7, it is a schematic diagram of a flow of the second communication method \provided in the present example. Compared with the aforementioned example shown in FIG. 5, it further comprises the following block S503.

Block S503: setting the MLAG system in a split state, if the keepalive link and the peer-link link established among multiple network devices are both disconnected and it is determined that the first path cost value is the same as the second path cost value.

Specifically, the keepalive and the peer-link link between network devices are in a disconnected state, but the first and second path cost values of the target device are the same. It can be determined for the target device that the number of interfaces being in a normal state on the target device has not changed. The interface between the network device and the target device is not disconnected. In this case, the network device can determine that only the keepalive link and the peer-link link among multiple network devices are disconnected, but the network device itself has not experienced an overall failure or restart. In this case, the MLAG system enters a split state, and network devices need to enter independent mode. In this case, it is necessary to adjust the MAC address of the network device and lower the LACP system priority of the network device.

In one example of this application, the network device may adjust the MAC address and LACP system priority back to the original MAC address and LACP system priority before configuring the MLAG system.

In the application scenarios shown in FIGs. 3 and 6, network device A1 can determine that both the keepalive link and peer-link link are disconnected.

In the solution provided in this application, in the case of STP based on IEEE 802.1t standard, network device A1 is in a normal state, and the aggregation interface connecting network device A3 and network device A4 comprises two interfaces which are in a normal state. In this case, as shown in Table 1, the first path cost value carried by the STP packet is 10000. Afterwards, both the keepalive link and peer-link link are disconnected. However, the aggregation interface connecting network device A3 and network device A4 still comprises two interfaces which are in a normal state. In this case, as shown in Table 1, the second path cost value carried by the STP packet is still 10000. The STP packet received by network device A2 carries the same first and second path cost values. Then network device A2 can determine that only the keepalive link and peer-link link between network device A1 and network device A2 have failed. In this case, the MLAG system is in a split state, and network device A2 needs to enter independent mode. Otherwise, network device A1 and network device A2 will affect each other's packet sending. Therefore, network devices need to update the current MAC address and LACP system priority.

As can be seen from the above, in the communication method provided in the present example, when the network device in the MLAG system determines that the keepalive link and peer-link link are both disconnected, it will not directly determine that the MLAG system is in a split state. In contrast, whether the first path cost value is the same as the second path cost value is determined; if same, it indicates that the state of the interface between the network device and the target device has not changed. Therefore, it can be determined that only the keepalive link and peer-link link fail, and the links among the network devices in the MLAG system are disconnected. The MLAG system needs to enter a split state, and network devices can enter independent mode normally to prevent each of multiple network devices from acting as the primary device and therefore affecting traffic sending.

In addition, the STP interface roles on different devices are different. When the STP interface role of the interface of the device is of the first type that can actively send the STP packet (i.e. the STP interface role is the specified interface), the device can actively send the STP packet through the interface. When the STP interface role of the interface of the device is the second type that cannot actively send the STP packet (i.e. the STP interface role is the root interface), the device cannot actively send the STP packet through the interface. Therefore, there are two situations when the target device send the STP packet to the network device, namely situation one and situation two.

Situation one: The STP interface role of the interface of the target device is of the first type.

In one case, the above-mentioned STP packet is the packet sent by the target device through the second interface when it is determined that the first interface of the multiple interfaces is in a shutdown state. The first interface is different from the second interface.

When the STP interface role of the interface of the target device is the first type, the target device can actively send the STP packet. Therefore, when the target device determines that the first interface is in a shutdown state, the target device can directly send the STP packet through the second interface. In this case, the STP packet can only be sent to the network device connected to the second interface.

In another case, the above-mentioned STP packet is a packet sent by the target device to the network device in the MLAG system according to the preset cycle and based on the hash principle.

When the STP interface role of the interface of the target device is of the first type, the target device can actively send the STP packet. The target device can send the STP packet to the network device in the MLAG system based on the hash principle and according to the preset cycle.

A packet sent based on the hash principle can be sent to any network device in the MLAG system.

This method can be applied to the situation where there are no interfaces on the target device being in the shutdown state in the interfaces connected to the network device in the MLAG system, including the absence of any failure in the interface on the network device in the MLAG system, or before the overall failure or restart of the network device in the MLAG system, or when the keepalive link and peer-link link among multiple network devices in the MLAG system are disconnected but the link between the network device and the target device has not failed.

Situation two: in the case where the STP interface role of the interface of the above network device is of the first type, any network device in the MLAG system further performs the following block A.

Block A: sending an STP proposal packet to the target device if the keepalive link and the peer-link link established among multiple network devices are both disconnected, so that after receiving the STP proposal packet, the target device feeds back the STP packet to the network devices in the MLAG system.

Due to the fact that the STP interface role of the interface of the above network device is of the first type and the STP interface role of the interface of the target device is the second type, the network device can actively send the STP packet through the interface, while the target device cannot actively send the STP packet. In this case, in order for the target device to send the STP packet to the network device, the network device needs to send the STP proposal packet to the target device.

The proposal flag located at Bit1 in the Flags carried by the above STP proposal packet is set to, which means the value thereof is taken as, a first preset value. For example, the proposal flag can be set to 1 or 0, indicating that this packet is an STP proposal packet.

After receiving the STP proposal packet, the target device determines that the network device has initiated a proposal for the STP packet. Therefore, the target device needs to respond to the corresponding STP packet, which can be called the STP agreement packet. The agreement flag located at Bit6 in the Flags carried by the STP response packet is set to, which means the value thereof is taken as, a second preset value. For example, the second preset value can set the agreement flag to either 1 or 0, indicating that the packet is an STP agreement packet.

Corresponding to the communication method applied to the network device mentioned above, an example of the present application also provides a communication method applied to the target device.

In one example of the present application, the target device applied to access the MLAG system involves the following blocks B to C.

Block B: sending the first STP packet to the network device in the MLAG system based on the hash principle.

The first STP packet comprises the first path cost value.

Block C: sending a second STP packet to the network device in the MLAG system based on the hash principle, wherein the second STP packet comprises a second path cost value, so that any one of the network devices in the MLAG system maintains the MLAG system when it is determined that the keepalive link and peer-link link established among the multiple network devices are both disconnected and the first path cost value is different from the second path cost value.

Wherein, the first path cost value is a path cost value carried in the STP packet received by the network device before the keepalive link and peer-link link are both disconnected, and the second path cost value is a path cost value carried in the STP packet received by the network device after the keepalive link and peer-link link are both disconnected.

As can be seen from the above, in the communication method provided in the present example, if any network device of the multiple network devices in the MLAG system determines that the keepalive link and peer-link link established among multiple network devices are disconnected, it will not directly enter the split state of the MLAG system. In contrast, whether the path cost value carried in the STP packet sent by the target device connected to the MLAG system has changed is determined. If other network devices other than the network device restart or fail, causing the aforementioned other network devices to not work properly, all interfaces of the other network devices mentioned above will be in a shutdown state, causing the channel between the other network devices and the target device to be disconnected, and the interfaces connected to other network devices on the target device to be in a shutdown state. In this case, the number of interfaces being in a normal state on the target device will change, resulting in a change in the path cost value carried in the STP packet sent by the target device. If the network device determines that the first path cost value and the second path cost value are different, it can be determined that all interfaces of the other network devices mentioned above are shut down, and the other network devices mentioned above are currently not working properly.

In this case, the network device will not directly enter the split state of the MLAG system due to the disconnection of links among multiple network devices. Instead, further judgment will be made based on whether the first path cost value and the second path cost value carried by the STP packet are the same. When it is determined that the first path cost value is different from the second path cost value, that is, when other network devices mentioned above are not currently working properly, the MLAG system is maintained and their current MAC address and priority are continue to be is maintained for sending traffic, thereby avoiding oscillation of the MLAG interface during the changing of the MAC address and priority, and avoiding affecting the sending of network traffic.

In one example of the present application, in the case where the STP interface roles of the multiple interfaces of the target device are of the first type, the first STP packet and the second STP packet are sent to the network device through the following block D.

Block D: sending the first STP packet and the second STP packet to the network device in the MLAG system via a second interface based on the hash principle, when it is determined that a first interface of the multiple interfaces is in a shutdown state.

The first interface is different from the second interface.

In one example of the present application, in the case where the STP interface roles of the multiple interfaces of the target device are of the first type, the first STP packet and the second STP packet are sent to the network device through the following block E.

Block E: sending the first STP packet and the second STP packet to the network device in the MLAG system according to a preset cycle based on a hash principle.

In one example of the present application, in the case where the STP interface role of the interface of the above network device is of the first type, a second STP packet is sent to the network device through the following block F.

Block F: feeding back the second STP packet to the network device in a case of receiving the STP proposal packet sent by the network device in the MLAG system mentioned above.

The above STP proposal packet is sent by the network device when it determines that the keepalive link and peer-link link established among multiple network devices in the MLAG system are all disconnected.

In one example of this application, the above-mentioned STP packet comprises an MST BPDU field, which carries the above-mentioned path cost value.

Corresponding to the aforementioned communication method, an example of the present application also provide a communication system.

An example of the present application provide a communication system, which comprises: multiple network devices forming a Multichassis Link Aggregation Group, MLAG, system, and a target device accessing the MLAG system, wherein the target device comprises multiple interfaces, each interface being used for accessing one network device in the MLAG system;
any one of the multiple network devices is to implement any one of the aforementioned communication methods applied to the network device;
the target device is to implement one of the aforementioned communication methods applied to the target device.

The structure of the above system can be the structure shown in FIG. 2, and will not be further elaborated here.

Corresponding to the communication method applied to the network device mentioned above, the examples of the present application also provide a network device.

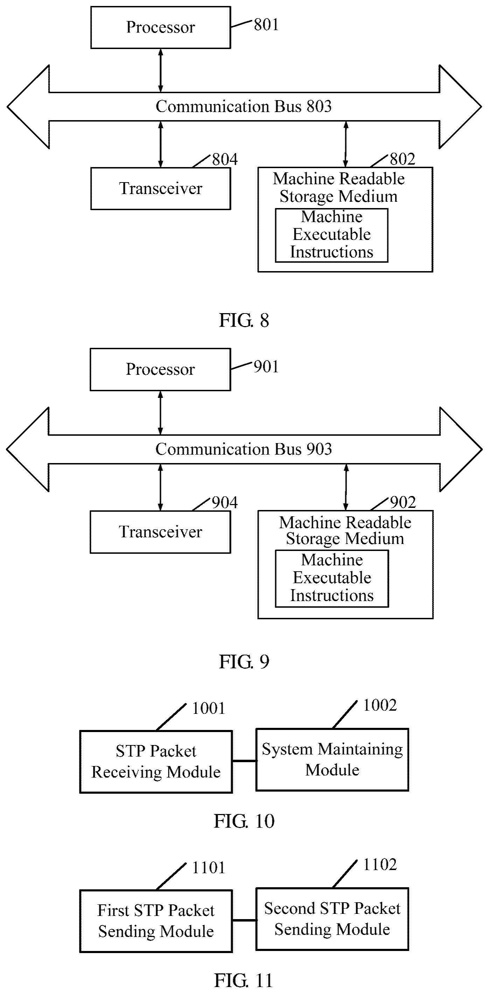

Referring to FIG. 8, it is a schematic diagram of a structure of a network device provided by an example of the present application, which is any one of multiple network devices forming a Multichassis Link Aggregation Group, MLAG, system, the network device comprises:
a processor 801;
a transceiver 804;
a machine readable storage medium 802, in which machine executable instructions executable by the processor 801 are stored, and the machine executable instructions cause the processor 801 to perform the following blocks:
   receiving a Spanning Tree Protocol, STP, packet carrying a path cost value sent by a target device, wherein the target device comprises multiple interfaces, each interface used to access a network device in the MLAG system, and the path cost value is used to indicate the number of interfaces being in a normal state of the multiple interfaces;
   maintaining the MLAG system, if a keepalive link and an Intra-Portal, peer-link, link established among the multiple network devices are both disconnected and it is determined that a first path cost value is different from a second path cost value, wherein the first path cost value is a path cost value carried in the STP packet received before the keepalive link and the peer-link link are both disconnected, and the second path cost value is a path cost value carried in the STP packet received after the keepalive link and the peer-link link are both disconnected.

As shown in FIG. 8, the network device may also include a communication bus 803. The communication between processor 801, machine readable storage medium 802, and transceiver 804 is completed through communication bus 803, which can be a Peripheral Component Interconnect (PCI) bus or an Extended Industry Standard Architecture (EISA) bus, etc. The communication bus 803 can be divided into address bus, data bus, control bus, etc.

The transceiver 804 can be a wireless communication module, which interacts with other devices for data under the control of the processor 801.

The machine readable storage medium 802 can include a random access memory (RAM), or can include a non-volatile memory (NVM), for example at least one disk memory. Furthermore, The machine readable storage medium 802 can also be at least one storage apparatus located away from the processor described above.

The processor 801 can be a general-purpose processor, such as a central processing unit (CPU), a network processor (NP), or the like; it can also be a digital signal processor (DSP), an application specific integrated circuit (ASIC), a field-programmable gate array (FPGA) or other programmable logic device, a discrete gate or transistor logic device, a discrete hardware component.

As can be seen from the above, in the communication method provided in the present example, if any network device of the multiple network devices in the MLAG system determines that the established keepalive link and peer-link link between multiple network devices are disconnected, it will not directly enter the split state of the MLAG system. In contrast, whether the path cost value carried in the STP packet sent by the target device connected to the MLAG system has changed is determined. If other network devices other than the network device restart or fail, causing the aforementioned other network devices to not work properly, all interfaces of said other network devices mentioned above will be in a shutdown state, causing the channel between said other network devices and the target device to be disconnected, and the interfaces connected to other network devices on the target device will also be in a shutdown state. In this case, the number of interfaces being in a normal state on the target device will change, resulting in a change in the path cost value carried in the STP packet sent by the target device. If the network device determines that the first path cost value and the second path cost value are different, it can be determined that all interfaces of said other network devices mentioned above are shut down, and said other network devices mentioned above are currently not working properly.

In this case, the network device will not directly enter the split state of the MLAG system due to the disconnection of links between multiple network devices. Instead, further judgment will be made based on whether the first path cost value and the second path cost value carried by the STP packet are the same. When determining that the first path cost value is different from the second path cost value, that is, when said other network devices mentioned above are not currently working properly, the MLAG system is maintained and their current MAC address and priority are continue to be maintained to send traffic. Therefore, oscillation of MLAG interface during the changing of MAC address and priority is avoided, thereby avoiding affecting the sending of network traffic.

In one example of the present application, the machine executable instructions further cause the processor to perform the following blocks:
setting the MLAG system in a split state, if the keepalive link and peer-link link established among multiple network devices are both disconnected and it is determined that the first path cost value is the same as the second path cost value.

As can be seen from the above, in the communication method provided in the present example, when the network device in the MLAG system determines that the keepalive link and peer-link link are both disconnected, it will not directly determine that the MLAG system is in a split state. In contrast, whether the first path cost value is the same as the second path cost value is determined; if same, it indicates that the state of the interface between the network device and the target device has not changed. Therefore, it can be determined that only the keepalive link and peer-link fail, and the links among network devices in the MLAG system are disconnected. The MLAG system needs to enter a split state, and network devices can enter independent mode normally to prevent each of multiple network devices from acting as the primary device and therefore affecting traffic sending.

In an example of the present application, in a case where STP interface roles of the multiple interfaces of the target device are of a first type, the STP packet is a packet that is sent by the target device through a second interface when it is determined that a first interface of the multiple interfaces is in a shutdown state, and the first interface is different from the second interface.

In an example of the present application, in a case where STP interface roles of the multiple interfaces of the target device are of a first type, the STP packet is: a packet that is sent by the target device to the network devices in the MLAG system according to a preset cycle based on a hash principle.

In an example of the present application, in a case where an STP interface role of the interface of the network device is of the first type, the machine executable instructions further cause the processor to perform the following block:
sending an STP proposal packet to the target device if the keepalive link and the peer-link link established among multiple network devices are both disconnected, so that after receiving the STP proposal packet, the target device feeds back the STP packet to the network device in the MLAG system.

In an example of the present application, the STP packet comprises a Multi Spanning Tree Bridge Protocol Data Unit, MST BPDU, field, which carries the path cost value.

Corresponding to the communication method applied to the target device mentioned above, the example of the present application also provide a target device.

Referring to FIG. 9, it is a schematic diagram of a structure of a target device provided by an example of the present application, which accesses a Multichassis Link Aggregation Group, MLAG, system, wherein the MLAG system is formed by multiple network devices, and the target device comprises multiple interfaces, each interface being used for accessing one network device in the MLAG system, the target device comprises:
a processor 901;
a transceiver 904;
a machine readable storage medium 902, in which machine executable instructions executable by a processor are stored, and the machine executable instructions cause the processor to perform the following blocks:
   sending a first Spanning Tree Protocol, STP, packet to the network device in the MLAG system based on a hash principle, wherein the first STP packet comprises a first path cost value;
   sending a second STP packet to the network device in the MLAG system based on the hash principle, wherein the second STP packet comprises a second path cost value, so that any one of the network devices in the MLAG system maintains the MLAG system when it is determined that the keepalive link and the Intra-Portal, peer-link, link established among the multiple network devices are both disconnected and the first path cost value is different from the second path cost value;
   wherein, the first path cost value is a path cost value carried in the STP packet received by the network device before the keepalive link and peer-link link are both disconnected, and the second path cost value is a path cost value carried in the STP packet received by the network device after the keepalive link and peer-link link are both disconnected.

As shown in FIG. 9, the network device may also include a communication bus 903. The communication between processor 901, machine readable storage medium 902, and transceiver 904 is completed through communication bus 903, which can be a Peripheral Component Interconnect (PCI) bus or an Extended Industry Standard Architecture (EISA) bus, etc. The communication bus 903 can be divided into address bus, data bus, control bus, etc.

The transceiver 904 can be a wireless communication module, and under the control of processor 901, it interacts with other devices for data.

The machine readable storage medium 902 can include a random access memory (RAM), or can include a non-volatile memory (NVM), for example at least one disk memory. Furthermore, The machine readable storage medium 902 can also be at least one storage apparatus located away from the processor described above.

The processor 901 can be a general-purpose processor, such as a central processing unit (CPU), a network processor (NP), or the like; it can also be a digital signal processor (DSP), an application specific integrated circuit (ASIC), a field-programmable gate array (FPGA) or other programmable logic device, a discrete gate or transistor logic device, a discrete hardware component.

As can be seen from the above, in the communication method provided in the present example, if any network device of the multiple network devices in the MLAG system determines that the keepalive link and peer-link link established among multiple network devices are disconnected, it will not directly enter the split state of the MLAG system. In contrast, whether the path cost value carried in the STP packet sent by the target device connected to the MLAG system has changed is determined. If other network devices other than the network device restart or fail, causing the aforementioned other network devices to not work properly, all interfaces of the other network devices mentioned above will be in a shutdown state, causing the channel between the other network devices and the target device to be disconnected, and the interfaces connected to other network devices on the target device to be in a shutdown state. In this case, the number of interfaces being in a normal state on the target device will change, resulting in a change in the path cost value carried in the STP packet sent by the target device. If the network device determines that the first path cost value and the second path cost value are different, it can be determined that all interfaces of the other network devices mentioned above are shut down, and the other network devices mentioned above are currently not working properly.

In this case, the network device will not directly enter the split state of the MLAG system due to the disconnection of links among multiple network devices. Instead, further judgment will be made based on whether the first path cost value and the second path cost value carried by the STP packet are the same. When it is determined that the first path cost value is different from the second path cost value, that is, when other network devices mentioned above are not currently working properly, the MLAG system is maintained and their current MAC address and priority are continue to be maintained for sending traffic, thereby avoiding oscillation of the MLAG interface during the changing of the MAC address and priority, and avoiding affecting the sending of network traffic.

In an example of the present application, in a case where STP interface roles of the multiple interfaces of the target device are of the first type, sending the first Spanning Tree Protocol, STP, packet to the network device in the MLAG system based on the hash principle and sending the second STP packet to the network device in the MLAG system based on the hash principle, comprise:
sending the first STP packet and the second STP packet to the network device in the MLAG system via a second interface based on the hash principle, when it is determined that a first interface of the multiple interfaces is in a shutdown state, wherein the first interface is different from the second interface.

In an example of the present application, in a case where STP interface roles of the multiple interfaces of the target device are of the first type, sending the first Spanning Tree Protocol, STP, packet to the network device in the MLAG system based on the hash principle and sending the second STP packet to the network device in the MLAG system based on the hash principle, comprise:
sending the first STP packet and the second STP packet to the network device in the MLAG system according to a preset cycle based on the hash principle.

In an example of the present application, in a case where an STP interface role of the interface of the network device is of a first type, sending the second STP packet to the network device in the MLAG system based on the hash principle, comprises:
feeding back the second STP packet to the network device in a case where an STP proposal packet sent by the network device in the MLAG system is received, wherein the STP proposal packet is sent when the network device determines that the keepalive link and the peer-link link established among the multiple network devices in the MLAG system are both disconnected.

In an example of the present application, the STP packet comprises a Multi Spanning Tree Bridge Protocol Data Unit, MST BPDU, field, which carries the path cost value.

Corresponding to the communication method applied to the network device mentioned above, the example of the present application also provide a communication apparatus applied to the network device.

Referring to FIG. 10, it is a schematic diagram of a structure of a first communication apparatus provided by an example of the present application, which is applied to any one of multiple network devices forming a Multichassis Link Aggregation Group, MLAG, system, and the apparatus comprises:
an STP packet receiving module 1001, to receive an STP packet carrying a path cost value sent by a target device, wherein the target device comprises multiple interfaces, each interface used to access a network device in the MLAG system, and the path cost value is used to indicate the number of interfaces being in a normal state of the multiple interfaces;
a system maintaining module 1002, to maintain the MLAG system, if a keepalive link and an Intra-Portal, peer-link, link established among the multiple network devices are both disconnected and it is determined that a first path cost value is different from a second path cost value, wherein the first path cost value is a path cost value carried in the STP packet received before the keepalive link and the peer-link link are both disconnected, and the second path cost value is a path cost value carried in the STP packet received after the keepalive link and the peer-link link are both disconnected.

As can be seen from the above, in the communication method provided in the present example, if any network device of the multiple network devices in the MLAG system determines that the established keepalive link and peer-link link between multiple network devices are disconnected, it will not directly enter the split state of the MLAG system. In contrast, whether the path cost value carried in the STP packet sent by the target device connected to the MLAG system has changed is determined. If other network devices other than the network device restart or fail, causing the aforementioned other network devices to not work properly, all interfaces of said other network devices mentioned above will be in a shutdown state, causing the channel between said other network devices and the target device to be disconnected, and the interfaces connected to other network devices on the target device will also be in a shutdown state. In this case, the number of interfaces being in a normal state on the target device will change, resulting in a change in the path cost value carried in the STP packet sent by the target device. If the network device determines that the first path cost value and the second path cost value are different, it can be determined that all interfaces of said other network devices mentioned above are shut down, and said other network devices mentioned above are currently not working properly.

In this case, the network device will not directly enter the split state of the MLAG system due to the disconnection of links between multiple network devices. Instead, further judgment will be made based on whether the first path cost value and the second path cost value carried by the STP packet are the same. When determining that the first path cost value is different from the second path cost value, that is, when said other network devices mentioned above are not currently working properly, the MLAG system is maintained and their current MAC address and priority are continue to be maintained to send traffic. Therefore, oscillation of MLAG interface during the changing of MAC address and priority is avoided, thereby avoiding affecting the sending of network traffic.

In an example of the present application, the apparatus further comprises:
a system splitting module, to set the MLAG system in a split state, if the keepalive link and the peer-link link established among multiple network devices are both disconnected and it is determined that the first path cost value is the same as the second path cost value.

As can be seen from the above, in the communication method provided in the present example, when the network device in the MLAG system determines that the keepalive link and peer-link link are both disconnected, it will not directly determine that the MLAG system is in a split state. In contrast, whether the first path cost value is the same as the second path cost value is determined; if same, it indicates that the state of the interface between the network device and the target device has not changed. Therefore, it can be determined that only the keepalive link and peer-link link fail, and the links among network devices in the MLAG system are disconnected. The MLAG system needs to enter a split state, and network devices can enter independent mode normally to prevent each of multiple network devices from acting as the primary device and therefore affecting traffic sending.

In an example of the present application, in a case where STP interface roles of the multiple interfaces of the target device are of a first type, the STP packet is a packet that is sent by the target device through a second interface when it is determined that a first interface of the multiple interfaces is in a shutdown state, and the first interface is different from the second interface.

In an example of the present application, in a case where STP interface roles of the multiple interfaces of the target device are of a first type, the STP packet is: a packet that is sent by the target device to the network devices in the MLAG system according to a preset cycle based on a hash principle.

In an example of the present application, in a case where an STP interface role of the interface of the network device is of the first type, the apparatus further comprises:
a proposal packet sending module, to send an STP proposal packet to the target device if the keepalive link and the peer-link link established among multiple network devices are both disconnected, so that after receiving the STP proposal packet, the target device feeds back the STP packet to the network device in the MLAG system.

In an example of the present application, the STP packet comprises a Multi Spanning Tree Bridge Protocol Data Unit, MST BPDU, field, which carries the path cost value.

Corresponding to the communication method applied to the target device mentioned above, the example of the present application provide a communication apparatus applied to the target device accessing an MLAG system. Referring to FIG. 11, it is a schematic diagram of a structure of a second communication apparatus provided by an example of the present application, wherein the MLAG system is formed by multiple network devices, and the target device comprises multiple interfaces, each interface being used for accessing one network device in the MLAG system, the apparatus comprises:
a first STP packet sending module 1101, to send a first Spanning Tree Protocol, STP, packet to the network device in the MLAG system based on a hash principle, wherein the first STP packet comprises a first path cost value;
a second STP packet sending module 1102, to send a second STP packet to the network device in the MLAG system based on the hash principle, wherein the second STP packet comprises a second path cost value, so that any one of the network devices in the MLAG system maintains the MLAG system when it is determined that the keepalive link and the Intra-Portal, peer-link, link established among the multiple network devices are both disconnected, and the first path cost value is different from the second path cost value;
wherein, the first path cost value is a path cost value carried in the STP packet received by the network device before the keepalive link and peer-link link are both disconnected, and the second path cost value is a path cost value carried in the STP packet received by the network device after the keepalive link and peer-link link are both disconnected.

As can be seen from the above, in the communication method provided in the present example, if any network device of the multiple network devices in the MLAG system determines that the keepalive link and peer-link link established among multiple network devices are disconnected, it will not directly enter the split state of the MLAG system. In contrast, whether the path cost value carried in the STP packet sent by the target device connected to the MLAG system has changed is determined. If other network devices other than the network device restart or fail, causing the aforementioned other network devices to not work properly, all interfaces of the other network devices mentioned above will be in a shutdown state, causing the channel between the other network devices and the target device to be disconnected, and the interfaces connected to other network devices on the target device to be in a shutdown state. In this case, the number of interfaces being in a normal state on the target device will change, resulting in a change in the path cost value carried in the STP packet sent by the target device. If the network device determines that the first path cost value and the second path cost value are different, it can be determined that all interfaces of the other network devices mentioned above are shut down, and the other network devices mentioned above are currently not working properly.

In this case, the network device will not directly enter the split state of the MLAG system due to the disconnection of links among multiple network devices. Instead, further judgment will be made based on whether the first path cost value and the second path cost value carried by the STP packet are the same. When it is determined that the first path cost value is different from the second path cost value, that is, when other network devices mentioned above are not currently working properly, the MLAG system is maintained and their current MAC address and priority are continue to be maintained for sending traffic, thereby avoiding oscillation of the MLAG interface during the changing of MAC address and priority, and avoiding affecting the sending of network traffic.

In an example of the present application, in a case where STP interface roles of the multiple interfaces of the target device are of the first type, sending the first Spanning Tree Protocol, STP, packet to the network device in the MLAG system based on the hash principle and sending the second STP packet to the network device in the MLAG system based on the hash principle, comprise:
sending the first STP packet and the second STP packet to the network device in the MLAG system via a second interface based on the hash principle, when it is determined that a first interface of the multiple interfaces is in a shutdown state, wherein the first interface is different from the second interface.

In an example of the present application, in a case where STP interface roles of the multiple interfaces of the target device are of the first type, sending the first Spanning Tree Protocol, STP, packet to the network device in the MLAG system based on the hash principle and sending the second STP packet to the network device in the MLAG system based on the hash principle, comprise:
sending the first STP packet and the second STP packet to the network device in the MLAG system according to a preset cycle based on the hash principle.

In an example of the present application, in a case where an STP interface role of the interface of the network device is of a first type, sending the second STP packet to the network device in the MLAG system based on the hash principle, comprises:
feeding back the second STP packet to the network device in a case where an STP proposal packet sent by the network device in the MLAG system is received, wherein the STP proposal packet is sent when the network device determines that the keepalive link and the peer-link link established among the multiple network devices in the MLAG system are both disconnected.

In an example of the present application, the STP packet comprises a Multi Spanning Tree Bridge Protocol Data Unit, MST BPDU, field, which carries the path cost value.

Based on the same invention concept, according to the communication method provided in the above examples of the present application, there is provided a machine readable storage medium storing machine executable instructions that, when called and executed by a processor, cause the processor to: implement any blocks of the communication method applied to a network device or target device.

In another example provided in this application, there is further provided a computer program product comprising instructions that, when run on a computer, cause the computer to execute any block of the communication method applied to a network device or target device in the above example.

In the aforementioned examples, it may be implemented in whole or in part by software, hardware, firmware, or any combination thereof. When implemented by software, it may be implemented in whole or in part in the form of a computer program product. The computer program product comprises one or more computer instructions. The processes or functions described in accordance with the examples of the present application is produced in whole or in part, when the computer program instructions are loaded and executed on a computer. The computer may be a general-purpose computer, a dedicated computer, a computer network, or other programmable device. The computer instructions may be stored in a computer-readable storage medium or may be transmitted from one computer-readable storage medium to another computer-readable storage medium, for example, the computer instructions may be transmitted from a web site, a computer, a server, or a data center to another web site, another computer, another server, or another data center via a cable (such as a coaxial cable, an optical fiber, a digital subscriber line (DSL)) or wireless (such as infrared, wireless, microwave, etc.). The computer-readable storage medium may be any available medium that may be accessed by a computer or a data storage device such as a server or a data center containing one or more available medium integrations. The available media may be magnetic media (such as floppy disks, hard disks, magnetic tapes), optical media (such as DVDs), or semiconductor media (such as solid state disk (SSD)), etc.

It should be noted that, the relationship terms herein such as "first", "second" and the like are only used to distinguish one entity or operation from another entity or operation, but do not necessarily require or imply that there is actual relationship or order between these entities or operations. Moreover, the terms "include", "comprise" or any other variants thereof are intended to cover non-exclusive inclusions, so that processes, methods, articles or devices including a series of elements include not only those elements listed but also those not specifically listed or the elements intrinsic to these processes, methods, articles, or devices. Without further limitations, elements defined by the sentences "comprise(s) a." or "include(s) a." do not exclude that there are other identical elements in the processes, methods, articles, or devices which include these elements.

All the examples are described in corresponding ways, same or similar parts in each of the examples can be referred to one another, and the parts emphasized are differences to other examples. In particular for examples of a communication method applied to a target device, a system, a network device, a target device, an apparatus, a computer-readable storage medium, and a computer program product, since they are substantially similar to the examples of the method, their description is relatively simple, and for the related aspects, one only needs to refer to portions of the description of the examples of the method.

The examples described above are merely preferred examples of the present application, and not intended to limit the scope of the present application. Any modifications, equivalents, improvements or the like within the spirit and principle of the application should be included in the scope of the application.

## Claims

1. A communication method, wherein, the method is applied to any one of multiple network devices forming a Multichassis Link Aggregation Group, MLAG, system, and the method comprises:
receiving a Spanning Tree Protocol, STP, packet carrying a path cost value sent by a target device, wherein the target device comprises multiple interfaces, each interface used to access one network device in the MLAG system, and the path cost value is used to indicate a number of interfaces being in a normal state of the multiple interfaces;
maintaining the MLAG system, if a keepalive link and an Intra-Portal, peer-link, link established among the multiple network devices are both disconnected and it is determined that a first path cost value is different from a second path cost value, wherein the first path cost value is a path cost value carried in the STP packet received before the keepalive link and the peer-link link are both disconnected, and the second path cost value is a path cost value carried in the STP packet received after the keepalive link and the peer-link link are both disconnected.

2. The method according to claim 1, wherein, the method further comprises:
setting the MLAG system in a split state, if the keepalive link and the peer-link link established among the multiple network devices are both disconnected and it is determined that the first path cost value is the same as the second path cost value.

3. The method according to claim 1 or 2, wherein, in a case where STP interface roles of the multiple interfaces of the target device are of a first type, the STP packet is a packet which is sent by the target device through a second interface when it is determined that a first interface of the multiple interfaces is in a shutdown state, wherein the first interface is different from the second interface.

4. The method according to claim 1 or 2, wherein, in a case where STP interface roles of the multiple interfaces of the target device are of a first type, the STP packet is a packet which is sent by the target device to the network device in the MLAG system according to a preset cycle based on a hash principle.

5. The method according to claim 1 or 2, wherein, in a case where an STP interface role of an interface of the network device is of a first type, the method further comprises:
sending an STP proposal packet to the target device if the keepalive link and the peer-link link established among the multiple network devices are both disconnected, so that after receiving the STP proposal packet, the target device feeds back the STP packet to the network device in the MLAG system.

6. The method according to claim 1 or 2, wherein, the STP packet comprises a Multi Spanning Tree Bridge Protocol Data Unit, MST BPDU, field, which carries the path cost value.

7. A communication method, wherein, the method is applied to a target device accessing a Multichassis Link Aggregation Group, MLAG, system, wherein the MLAG system is formed by multiple network devices, and the target device comprises multiple interfaces, each interface being used for accessing one network device in the MLAG system, the method comprises:
sending a first Spanning Tree Protocol, STP, packet to the network device in the MLAG system based on a hash principle, wherein the first STP packet comprises a first path cost value;
sending a second STP packet to the network device in the MLAG system based on the hash principle, wherein the second STP packet comprises a second path cost value, so that any one of the network devices in the MLAG system maintains the MLAG system when it is determined that a keepalive link and an Intra-Portal, peer-link, link established among the multiple network devices are both disconnected and the first path cost value is different from the second path cost value;
wherein, the first path cost value is a path cost value carried in the STP packet received by the network device before the keepalive link and the peer-link link are both disconnected, and the second path cost value is a path cost value carried in the STP packet received by the network device after the keepalive link and the peer-link link are both disconnected.

8. The method according to claim 7, wherein, in a case where STP interface roles of the multiple interfaces of the target device are of the first type, sending the first Spanning Tree Protocol, STP, packet to the network device in the MLAG system based on the hash principle, and, sending the second STP packet to the network device in the MLAG system based on the hash principle, comprise:
sending the first STP packet and the second STP packet to the network device in the MLAG system through a second interface based on the hash principle, when it is determined that a first interface of the multiple interfaces is in a shutdown state, wherein the first interface is different from the second interface.

9. The method according to claim 7, wherein, in a case where STP interface roles of the multiple interfaces of the target device are of the first type, sending the first Spanning Tree Protocol, STP, packet to the network device in the MLAG system based on the hash principle, and, sending the second STP packet to the network device in the MLAG system based on the hash principle, comprise:
sending the first STP packet and the second STP packet to the network device in the MLAG system according to a preset cycle based on a hash principle.

10. The method according to claim 7, wherein, in a case where an STP interface role of an interface of the network device is of a first type, sending the second STP packet to the network device in the MLAG system based on the hash principle comprises:
feeding back the second STP packet to the network device in a case where an STP proposal packet sent by the network device in the MLAG system is received, wherein the STP proposal packet is sent when the network device determines that the keepalive link and the peer-link link established among the multiple network devices in the MLAG system are both disconnected.

11. The method according to any one of claims 7-10, wherein, the STP packet comprises a Multi Spanning Tree Bridge Protocol Data Unit, MST BPDU, field, which carries the path cost value.

12. A communication system, wherein, the system comprises: multiple network devices forming a Multichassis Link Aggregation Group, MLAG, system; and a target device accessing the MLAG system, wherein the target device comprises multiple interfaces, each interface being used for accessing one network device in the MLAG system;
any one of the multiple network devices is to implement the method according to any one of claims 1-6;
the target device is to implement the method according to any one of claims 7-11.

13. A network device, wherein, the network device is any one of multiple network devices forming a Multichassis Link Aggregation Group, MLAG, system, the network device comprises:
a processor;
a transceiver;
a machine readable storage medium, in which machine executable instructions executable by a processor are stored, and the machine executable instructions cause the processor to perform the following blocks:
receiving a Spanning Tree Protocol, STP, packet carrying a path cost value sent by a target device, wherein the target device comprises multiple interfaces, each interface used to access one network device in the MLAG system, and the path cost value is used to indicate a number of interfaces being in a normal state of the multiple interfaces;
maintaining the MLAG system, if a keepalive link and an Intra-Portal, peer-link, link established among the multiple network devices are both disconnected and it is determined that a first path cost value is different from a second path cost value, wherein the first path cost value is a path cost value carried in the STP packet received before the keepalive link and the peer-link link are both disconnected, and the second path cost value is a path cost value carried in the STP packet received after the keepalive link and the peer-link link are both disconnected.

14. The network device according to claim 13, wherein, the machine executable instructions further cause the processor to perform the following block:
setting the MLAG system in a split state, if the keepalive link and the peer-link link established among the multiple network devices are both disconnected and it is determined that the first path cost value is the same as the second path cost value.

15. The network device according to claim 13 or 14, wherein, in a case where STP interface roles of the multiple interfaces of the target device are of a first type, the STP packet is a packet which is sent by the target device through a second interface when it is determined that a first interface of the multiple interfaces is in a shutdown state, wherein the first interface is different from the second interface.

16. The network device according to claim 13 or 14, wherein, in a case where STP interface roles of the multiple interfaces of the target device are of a first type, the STP packet is a packet that is sent by the target device to the network device in the MLAG system according to a preset cycle based on a hash principle.

17. The network device according to claim 13 or 14, wherein, in a case where an STP interface role of an interface of the network device is of a first type, the machine executable instructions further cause the processor to perform the following block:
sending an STP proposal packet to the target device if the keepalive link and the peer-link link established among multiple network devices are both disconnected, so that after receiving the STP proposal packet, the target device feeds back the STP packet to the network device in the MLAG system.

18. The network device according to claim 13 or 14, wherein, the STP packet comprises a Multi Spanning Tree Bridge Protocol Data Unit, MST BPDU, field, which carries the path cost value.

19. A target device, wherein, the target device accesses a Multichassis Link Aggregation Group, MLAG, system, wherein the MLAG system is formed by multiple network devices, and the target device comprises multiple interfaces, each interface being used for accessing one network device in the MLAG system, the target device comprises:
a processor;
a transceiver;
a machine readable storage medium, in which machine executable instructions executable by a processor are stored, and the machine executable instructions cause the processor to perform the following blocks:
sending a first Spanning Tree Protocol, STP, packet to the network device in the MLAG system based on a hash principle, wherein the first STP packet comprises a first path cost value;
sending a second STP packet to the network device in the MLAG system based on the hash principle, wherein the second STP packet comprises a second path cost value, so that any one of the network devices in the MLAG system maintains the MLAG system when it is determined that a keepalive link and an Intra-Portal, peer-link, link established among the multiple network devices are both disconnected and the first path cost value is different from the second path cost value;
wherein, the first path cost value is a path cost value carried in the STP packet received by the network device before the keepalive link and the peer-link link are both disconnected, and the second path cost value is a path cost value carried in the STP packet received by the network device after the keepalive link and the peer-link link are both disconnected.

20. The target device according to claim 19, wherein, in a case where STP interface roles of the multiple interfaces of the target device are of the first type, sending the first Spanning Tree Protocol, STP, packet to the network device in the MLAG system based on the hash principle, and, sending the second STP packet to the network device in the MLAG system based on the hash principle, comprise:
sending the first STP packet and the second STP packet to the network device in the MLAG system through a second interface based on the hash principle, when it is determined that a first interface of the multiple interfaces is in a shutdown state, wherein the first interface is different from the second interface.

21. The target device according to claim 19, wherein, in a case where STP interface roles of the multiple interfaces of the target device are of the first type, sending the first Spanning Tree Protocol, STP, packet to the network device in the MLAG system based on the hash principle, and, sending the second STP packet to the network device in the MLAG system based on the hash principle, comprise:
sending the first STP packet and the second STP packet to the network device in the MLAG system according to a preset cycle based on a hash principle.

22. The target device according to claim 19, wherein, in a case where an STP interface role of an interface of the network device is of a first type, sending the second STP packet to the network device in the MLAG system based on the hash principle comprises:
feeding back the second STP packet to the network device in a case where an STP proposal packet sent by the network device in the MLAG system is received, wherein the STP proposal packet is sent when the network device determines that the keepalive link and the peer-link link established among the multiple network devices in the MLAG system are both disconnected.

23. The target device according to any one of claims 19-22, wherein, the STP packet comprises a Multi Spanning Tree Bridge Protocol Data Unit, MST BPDU, field, which carries the path cost value.

24. A communication apparatus, wherein, the communication apparatus is applied to any one of multiple network devices forming a Multichassis Link Aggregation Group, MLAG, system, and the apparatus comprises:
an STP packet receiving module, to receive a Spanning Tree Protocol, STP, packet carrying a path cost value sent by a target device, wherein the target device comprises multiple interfaces, each interface used to access one network device in the MLAG system, and the path cost value is used to indicate a number of interfaces being in a normal state of the multiple interfaces;
a system maintaining module, to maintain the MLAG system, if a keepalive link and an Intra-Portal, peer-link, link established among the multiple network devices are both disconnected and it is determined that a first path cost value is different from a second path cost value, wherein the first path cost value is a path cost value carried in the STP packet received before the keepalive link and the peer-link link are both disconnected, and the second path cost value is a path cost value carried in the STP packet received after the keepalive link and the peer-link link are both disconnected.

25. A communication apparatus, wherein, the communication apparatus is applied to a target device accessing a Multichassis Link Aggregation Group, MLAG, system, wherein the MLAG system is formed by multiple network devices, and the target device comprises multiple interfaces, each interface being used for accessing one network device in the MLAG system, the apparatus comprises:
a first STP packet sending module, to send a first Spanning Tree Protocol, STP, packet to the network device in the MLAG system based on a hash principle, wherein the first STP packet comprises a first path cost value;
a second STP packet sending module, to send a second STP packet carrying a path cost value to the network device in the MLAG system based on the hash principle, wherein the second STP packet comprises a second path cost value, so that any one of the network devices in the MLAG system maintains the MLAG system when it is determined that a keepalive link and an Intra-Portal, peer-link, link established among the multiple network devices are both disconnected and the first path cost value is different from the second path cost value;
wherein, the first path cost value is a path cost value carried in the STP packet received by the network device before the keepalive link and the peer-link link are both disconnected, and the second path cost value is a path cost value carried in the STP packet received by the network device after the keepalive link and the peer-link link are both disconnected.

26. A machine readable storage medium, wherein, machine executable instructions are stored in the machine readable storage medium, which, when called and executed by a processor, cause the processor to implement the method according to any one of claims 1-6 or according to any one of claims 7-11.

27. A computer program product, wherein, the computer program product causes a processor to implement the method according to any one of claims 1-6 or according to any one of claims 7-11.
